Europäisches Patentamt

European Patent Office

Office européen des brevets

(19)

(11) Veröffentlichungsnummer: **0 242 621**
**A2**

(12) # EUROPÄISCHE PATENTANMELDUNG

(21) Anmeldenummer: 87104368.3

(22) Anmeldetag: 25.03.87

(51) Int. Cl.³: **A 63 D 15/08**

(30) Priorität: 18.04.86 DE 3613131

(43) Veröffentlichungstag der Anmeldung:
28.10.87 Patentblatt 87/44

(84) Benannte Vertragsstaaten:
AT BE CH DE ES FR GB GR IT LI NL SE

(71) Anmelder: Pudlo, Karl-Heinz
Nelkenstrasse 40
7515 Linkenheim-Hchst.(DE)

(72) Erfinder: Pudlo, Karl-Heinz
Nelkenstrasse 40
7515 Linkenheim-Hchst.(DE)

(74) Vertreter: Brommer, Hans Joachim, Dr.-Ing. et al,
Patentanwälte Dipl.-Ing. R. Lemcke Dr.-Ing. H.J. Brommer
Amalienstrasse 28 Postfach 4026
D-7500 Karlsruhe 1(DE)

(54) Billardstock.

(57) Die Erfindung betrifft einen Billardstock, dessen Stab aus einem homogenen Vollmaterial aus glasfaserverstärktem, ungesättigtem Duroplast mit einem Glasgehalt von 54 bis 70 Gew.prozent, insbesondere von 56 bis 68 Gew.prozent besteht. Außerdem betrifft die Erfindung ein Verfahren zur Herstellung eines solchen Billardstockes, indem durch Strangpressen ein zunächst zylindrisches Stabmaterial geformt wird, dieses Stabmaterial sodann gehärtet und schließlich in die übliche konische Form geschliffen wird.

Fig. 1

EP 0 242 621 A2

Croydon Printing Company Ltd.

PATENTANWÄLTE
DIPL.-ING. R. LEMCKE
DR.- ING. H. J. BROMMER
AMALIENSTRASSE 28
7500 KARLSRUHE 1

Karl-Heinz Pudlo
Nelkenstraße 40

7515 Linkenheim-Hchst.

B i l l a r d s t o c k
=========================

Die Erfindung geht aus von einem Billardstock, bestehend aus einem Stab mit rundem Querschnitt, der an seinem einen Ende mit einem Griff versehen ist und sich zum anderen, eine Lederkappe tragenden Ende hin konisch verjüngt.

Es ist üblich, Billardstöcke aus Holz herzustellen und sie an ihrem Griffende durch ein Gewicht zu beschweren, damit sie die vom Spieler gewünschte Stoßcharakteristik und Masse aufweisen. Zu diesem Zweck wird das Griffende in Axialrichtung ausgebohrt und diese Bohrung durch ein passendes, zylindrisches Eisengewicht gefüllt. Sodann wird das Gewicht durch eine Verschlußkappe fixiert. Der Billardstock bringt so das gewünschte Gewicht von 550 g bis 650 g.

Bei starker Benutzung hat sich gezeigt, daß die ständigen Längsstöße, die mit dem Billardstock ausgeübt werden, allmählich zu einer Lockerung des Metallgewichtes führen, so daß es in seiner Bohrung ein gewisses Axialspiel erhält.

Dies führt schließlich dazu, daß das Gewicht nach einem ausgeführten Stoß mit dem Billardstock nachschlägt und quasi einen zweiten Stoß erzeugt. Diese Erscheinung ist für ein Spiel, bei dem große Konzentration, Fingerspitzengefühl und feinfühliges Hantieren erforderlich sind, ein erhebliches Handicap.

Ein weiterer Nachteil der bekannten Billardstöcke besteht darin, daß sie auch ohne Benutzung nur eine sehr begrenzte Lebensdauer haben, weil sie durch Temperatur- und Feuchtigkeitseinflüsse zum Verziehen neigen.

Hiervon ausgehend, liegt der vorliegenden Erfindung die Aufgabe zugrunde, den bekannten Billardstock dahingehend zu verbessern, daß er sich unter Beibehaltung des gewünschten Gewichtsbereiches durch gleichbleibend gute Stoßqualität auszeichnet. Gleichzeitig soll der erfindungsgemäße Billardstock auch eine höhere Lebensdauer als bisher aufweisen.

Diese Aufgabe wird erfindungsgemäß dadurch gelöst, daß der Stab aus einem homogenen Vollmaterial aus glasfaserverstärktem, ungesättigtem Duroplast besteht und sein Glasgehalt 56 bis 68 Gewichtsprozent beträgt.

Die gefundene konstruktive Ausbildung in Kombination mit der speziellen Materialzusammensetzung erfüllt alle Forderungen, die an einen Billardstock gestellt werden, in vollkommener Weise.

Erstens erübrigt sich das aufwendige Einbringen eines Metallgewichtes und demzufolge entfällt auch das beschriebene Nachschlagen dieses Gewichtes nach dem Stoß.

Zweitens hat der erfindungsgemäße Billardstock aufgrund seiner homogenen Materialbeschaffenheit eine wesentlich bessere, nämlich eine lineare, sprungfreie Gewichtsverteilung über der Länge. Er ist dadurch leichter bzw. genauer zu steuern. Auch spielt es keine so große Rolle mehr, wo die den Stoß führende Hand am Griffende angreift, wohingegen es bei den herkömmlichen Billardstöcken durchaus von Einfluß war, ob man vor oder hinter oder in dem Bereich gehalten hat, in dem das Gewicht angeordnet ist.

Drittens zeichnet sich der erfindungsgemäße Billardstock durch hohe Steifigkeit, Beständigkeit gegenüber Temperatur- und Feuchtigkeitseinfluß und dementsprechend durch eine wesentlich erhöhte Lebensdauer aus.

Viertens ist die Oberfläche des Stabes überraschend glatt - trotz des erheblichen Anteiles an Glasfasern. Dies ist für die Spieleigenschaften von gravierender Bedeutung, denn der Billardstock muß beim Stoß gut durch die Führungshand laufen.

Besonders zweckmäßig ist es, wenn der Glasgehalt zwischen 59 und 65 Gewichtsprozent liegt. Das Material ist dann weder zu weich noch zu spröde.

Die Glasfasern bestehen vorzugsweise nicht aus Matten oder Geweben, sondern aus parallelgerichteten, in Stablängsrichtung laufenden Rovings.

4

Als Duroplast empfiehlt sich in erster Linie Polyesterharz. Es können stattdessen aber auch Phenol-, Melamin- oder Epoxydharze verwendet werden.

Schließlich ist es vorteilhaft, den Griff am Ende des Billardstockes als Schrumpfschlauch auszubilden.

Die Herstellung des erfindungsgemäßen Billardstockes erfolgt zweckmäßig nach folgendem Verfahren: Durch Strangpressen des in der vorgeschriebenen Menge mit Glasfasern versetzten Duroplastes wird ein zunächst zylindrisches Stabmaterial geformt, das sodann gehärtet und auf die vorgeschriebene Länge abgelängt wird. Schließlich werden die Stäbe einzeln in die gewünschte konische Form geschliffen und sodann mit dem Griff und der Lederkappe komplettiert.

Die Zeichnung zeigt ein Ausführungsbeispiel eines erfindungsgemäßen Billardstockes mit folgenden Maßen:

Durchmesser: 12 mm bis 20 mm, konisch verlaufend;

Länge: 1400 mm, am unteren Ende 550 mm zylindrisch;

Grifflänge: 400 mm, aufgeschobener Kunststoff-Schrumpfschlauch.

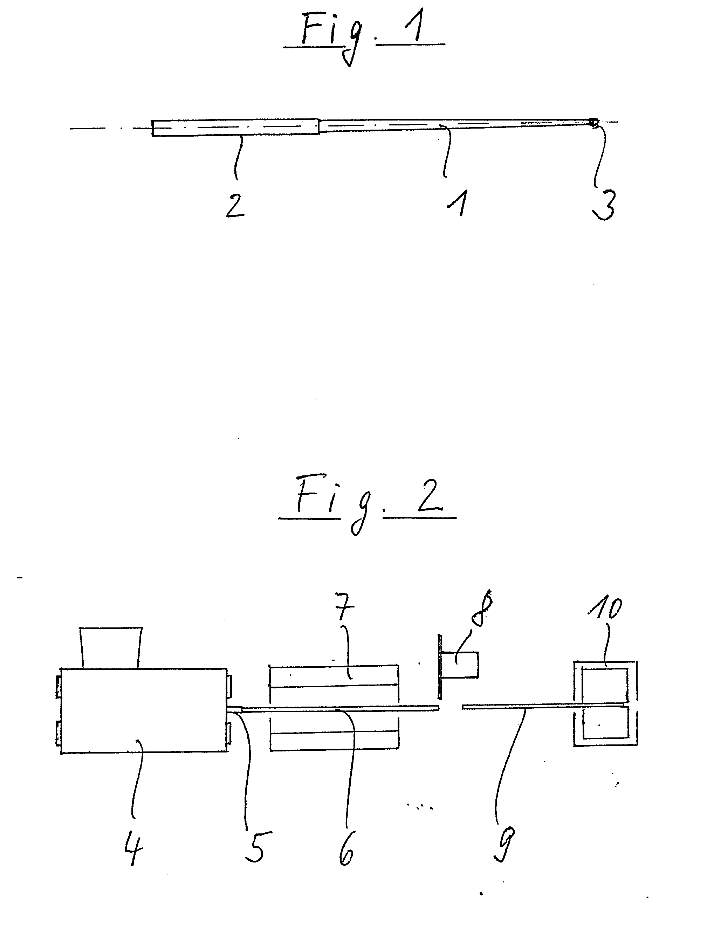

Wie man sieht, weist der Stab 1 von vorn bis hinten einen homogenen Materialaufbau auf. Er besteht im Ausführungsbeispiel gemäß Fig. 1 aus glasfaserverstärktem Kunststoff auf Basis von E-Glas und ungesättigtem Polyesterharz. Der erfindungswesentliche Glasanteil liegt bei 60 bis 65 Gewichtsprozent.

In dem zylindrischen Griffbereich ist der Stab 1 von einem Kunststoff-Schrumpfschlauch 2 umgeben, während an seinem anderen Ende in der üblichen Weise eine Lederkappe 3 aufgesteckt ist. Der Bereich zwischen dem Schrumpfschlauch 2 und der Lederkappe 3 ist durch Abschleifen des zunächst zylindrischen Stabmaterials in die gezeigte konische Form gebracht worden.

Fig. 2 zeigt schematisch den Herstellungsgang der erfindungsgemäßen Stäbe.

In einer Strangpresse 4 wird das erhitzte und mit Glasfasern vermischte, ggf. eingefärbte Polyesterharz bearbeitet und durch eine zylindrische Matritze 5 hindurchgepreßt, so daß ein entsprechender zylindrischer Strang 6 entsteht.

Durch das Strangpreßverfahren ergibt sich der Vorteil, daß die Glasfasern in Längsrichtung des Stranges ausgerichtet werden und daß der Strang eine saubere, glatte Oberfläche ohne herausstehende Faserenden erhält.

6

Anschließend durchläuft der Strang 6 eine Wärmekammer 7, wo er gehärtet wird. Durch eine danach angeordnete Trennscheibe 8 wird der Strang 6 in einzelne Stäbe 9 der vorgeschriebenen Länge durchtrennt. Schließlich werden die einzelnen Stäbe 9 in einer Schleifmaschine 10 in die konische Form geschliffen.

Es liegt selbstverständlich im Rahmen der Erfindung, noch zusätzliche, nicht genannte Füllstoffe in das Stabmate-rial einzubringen.

PATENTANWÄLTE

DIPL.-ING. R. LEMCKE
DR.-ING. H. J. BROMMER

AMALIENSTRASSE 28
7500 KARLSRUHE 1

TELEFON (07 21) 2 87 78-9
TELEFAX (07 21) 2 11 05

0242621

20.02.86
(14045/46) B/Bz

Karl-Heinz Pudlo
Nelkenstraße 40
7515 Linkenheim-Hchst.

Patentansprüche
================

1. Billardstock, bestehend aus einem Stab mit rundem
Querschnitt, der an seinem einen Ende mit einem Griff
versehen ist und sich zum anderen, eine Lederkappe tragenden Ende hin konisch verjüngt,
dadurch gekennzeichnet,
daß der Stab (1) aus einem homogenen Vollmaterial aus
glasfaserverstärktem, ungesättigtem Duroplast besteht
und sein Glasgehalt bei 54 bis 70 Gew.prozent, insbesondere bei 56 bis 68 Gew.prozent liegt.

2. Billardstock nach Anspruch 1, dadurch gekennzeichnet, daß der Glasgehalt des Stabes (1) bei 62 $\pm$ 3 Gew.-
prozent liegt.

8

3. Billardstock nach Anspruch 1 oder 2, dadurch gekennzeichnet, daß die Glasfasern aus parallelgerichteten, in Stablängsrichtung laufenden Rovings bestehen.

4. Billardstock nach einem der vorhergehenden Ansprüche, dadurch gekennzeichnet, daß der Duroplast Polyesterharz ist.

5. Billardstock nach einem der vorhergehenden Ansprüche, dadurch gekennzeichnet, daß der Griff (2) aus einem aufgeschrumpften Schlauch besteht.

6. Verfahren zur Herstellung eines Billardstockes nach einem der vorhergehenden Ansprüche, dadurch gekennzeichnet, daß durch Strangpressen ein zunächst zylindrisches Stabmaterial geformt wird, daß das Stabmaterial sodann gehärtet und schließlich, ggf. nach Ablängen, in die gewünschte konische Form geschliffen wird.

Fig. 1

2           1        3

Fig. 2

7     8     10

4    5    6    9